# EUROPÄISCHE PATENTSCHRIFT

(11) **EP 3 488 951 B1**
(45) Veröffentlichungstag und Bekanntmachung des Hinweises auf die Patenterteilung: **29.09.2021**
(21) Anmeldenummer: 18200332.7
(22) Anmeldetag: 15.10.2018
(51) Int. Cl.: B22F 10/22, B22F 12/53, B22F 3/00, B22F 3/115, B33Y 30/00, B05B 1/08, B41J 2/005

(54) **DRUCKKOPF FÜR EINEN 3D-DRUCKER**
PRINT HEAD FOR A 3D PRINTER
TÊTE D'IMPRESSION POUR UNE IMPRIMANTE TRIDIMENSIONNELLE

(30) Priorität: 27.11.2017 DE 102017221162
(43) Veröffentlichungstag der Anmeldung: 29.05.2019
(73) Patentinhaber: Robert Bosch GmbH, 70442 Stuttgart (DE)
(72) Erfinder: Voehringer, Peter, 70806 Kornwestheim (DE); Maier, Eberhard, 73257 Koengen (DE); Schweizer, Benjamin, 72160 Horb (DE); Riegler, Udo, 70439 Stuttgart (DE)

(56) Entgegenhaltungen:
- KR-A- 20050 043 295
- DATABASE WPI Week 200835 Thomson Scientific, London, GB; AN 2008-F19811 XP002790484, -& KR 100 735 115 B1 (KOREA INST MACHINERY & MATERIALS) 6. Juli 2007 (2007-07-06)

## Beschreibung

Die Erfindung betrifft einen Druckkopf für einen 3D-Drucker.

### Stand der Technik

Ein 3D-Drucker für ein thermoplastisches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in den das Ausgangsmaterial geschmolzen wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Der Druckkopf hat einen ersten Betriebszustand, in dem flüssiges Material aus ihm austritt, und einen zweiten Betriebszustand, in dem kein flüssiges Material aus ihm austritt. Der zweite Betriebszustand wird beispielsweise dann eingenommen, wenn eine andere Position auf der Arbeitsfläche angefahren werden und auf dem Weg dorthin kein Material deponiert werden soll. Zwischen den beiden Betriebszuständen des Druckkopfes kann beispielsweise umgeschaltet werden, indem der Vortrieb des festen Ausgangsmaterials ein- bzw. ausgeschaltet wird.

Gegenüber thermoplastischen Kunststoffen haben Metalle einen wesentlich höheren Schmelzpunkt und zugleich im flüssigen Zustand eine wesentlich geringere Viskosität.

Die DE102016224047 A1 zeigt einen Druckkopf für einen 3D-Drucker, insbesondere Metalldrucker, umfassend ein Gehäuse, eine Vorrichtung zur Zuführung eines Metalls, einen Kolben, ein Reservoir mit einer Austrittsöffnung und eine Aktorvorrichtung zur Verschiebung des Kolbens.

Sie zeichnet sich dadurch aus, dass das Reservoir einen Schmelzbereich und einen Verdrängerraum für eine flüssige Phase des Metalls aufweist, wobei der Schmelzbereich an einer inerten Atmosphäre angrenzt und mit dem Verdrängerraum derart verbunden ist, dass durch die Verschiebung des Kolbens die flüssige Phase des Metalls zum Durchtritt durch die Austrittsöffnung anregbar ist.

Das Dokument KR100735115B1 offenbart einen Druckkopf für einen 3D-Drucker, insbesondere Metalldrucker, umfassend ein Gehäuse, eine Vorrichtung zur Zuführung eines Metalls, ein Reservoir für eine flüssige Phase des Metalls, eine Düsenvorrichtung mit einer Führungshülse und einer Düsenplatte und einen Kolben, umfassend eine Kolbenstange und einen Stempel.

Der Erfindung liegt die Aufgabe zugrunde, bezüglich der Druckgenauigkeit und der Reproduzierbarkeit einen verbesserten Druckkopf bereitzustellen.

### Offenbarung der Erfindung

Die Aufgabe wird durch den erfindungsgemäßen Druckkopf mit den Merkmalen gemäß Anspruch 1 erfüllt.

Der erfindungsgemäße Druckkopf für einen 3D-Drucker, insbesondere Metalldrucker, umfassend ein Gehäuse, eine Vorrichtung zur Zuführung eines Metalls, ein Reservoir für eine flüssige Phase des Metalls, eine Düsenvorrichtung mit einer Führungshülse und einer Düsenplatte und einen Kolben, umfassend eine Kolbenstange und einen Stempel, wobei der Stempel, die Führungshülse und die Düsenplatte einen Verdrängerraum zur Aufnahme der flüssigen Phase des Metalls ausbilden. Der Stempel und die Führungshülse bilden zumindest zwei Bereiche mit unterschiedlichen Öffnungsquerschnitten zur Durchführung der flüssigen Phase zwischen dem Reservoir und dem Verdrängerraum aus.
Die Geometrie des Kolbens, insbesondere die Geometrie des Führungsspaltes, der sich aus den zumindest zwei Bereichen zwischen dem Stempel und der Führungshülse ergeben, bestimmen die Qualität der Funktion des gesamten Druckkopfes, indem sie die Zahl der ausgestoßenen Metallligamente je Aktuierung, bzw. Anregungspuls von Null über ein oder mehrere Tropfen und deren Ausbreitungsrichtung maßgeblich beeinflussen.
Die Ausgestaltung der Erfindung sorgt in vorteilhafter Weise für eine positive Beeinflussung der genannten Punkte.
Die unterschiedlichen Öffnungsquerschnitte der zumindest zwei Bereiche sorgen ferner in vorteilhafter Weise für einen gleichmäßigen Druckaufbau im Verdrängerraum und dadurch zu einem verbesserten Aktuierungsstoß, bzw. Ausstoß der flüssigen Phase des Metalls. Die Reproduzierbarkeit der Druckergebnisse werden somit verbessert.

Ferner ist ein erster Bereich durch eine erste Kontur des Stempels und einer Innenfläche der Führungshülse ausgebildet, wobei die erste Kontur Teilbereiche aufweist durch die der Stempel in der Führungshülse geführt ist und Ausnehmungen aufweist, die mit der Innenfläche der Führungshülse einen ersten Öffnungsquerschnitt zur Durchführung der flüssigen Phase ausbilden.
Die Teilbereiche an der ersten Kontur des Stempels führen den Stempel in der Führungshülse, wodurch in vorteilhafter weise eine axiale Führung des Stempels und dadurch auch des Kolbens in der Führungshülse erreicht wird. Die Außenfläche, bzw. Geometrie der Teilbereiche des Stempels entspricht der Innenfläche, bzw. Geometrie der Führungshülse, wodurch der Stempel partiell an der Führungshülse anliegt und dadurch in vorteilhafter Weise axial geführt wird. Die Ausnehmungen der ersten Kontur des Stempels ermöglichen in vorteilhafter Weise eine Durchführung der flüssigen Phase des Metalls, bzw. eine Durchführung der Schmelze.

Die Innenfläche der Führungshülse ist kreisförmig ausgebildet, wobei in einer vorteilhaften Weiterbildung die erste Kontur des Stempels kreisförmige Teilbereiche aufweist durch die der Stempel in der Führungshülse konzentrisch geführt ist.

Die Flächen der kreisförmigen Teilbereiche zentrieren in vorteilhafter Weise den Stempel innerhalb der Führungshülse, wodurch ein stabiler Druckprozess erreicht wird. Die Außendurchmesser der kreisförmigen Teilbereiche der ersten Kontur des Stempels entsprechen annähernd dem Innendurchmesser der Führungshülse. Sie geben den Zentrierungsdurchmesser der Bauteile vor. Zwischen den kreisförmigen Teilbereichen sind die Ausnehmungen der ersten Kontur des Stempels angeordnet. Sie sind in vorteilhafter Weise gleichmäßig über den Umfang der ersten Kontur verteilt, um einen gleichmäßigen Durchfluss der flüssigen Phase des Metalls zu erreichen. Es ist von Vorteil die Ausnehmungen in einer geraden Kontur auszuführen wodurch ein sogenanntes 3-Flach entsteht.

In einer Weiterbildung weist die erste Kontur drei konzentrisch angeordnete Teilbereiche auf. Die Zentrierung des Stempels über drei Teilbereiche innerhalb der Führungshülse hat sich als besonders vorteilhaft herausgestellt.

Ferner ist ein zweiter Bereich mit einem zweiten Öffnungsquerschnitt zur Durchführung der flüssigen Phase durch eine zweite Kontur des Stempels und der Innenfläche der Führungshülse ausgebildet.
Die zweite Kontur des Stempels ist erfindungsgemäß kreisförmig ausgebildet und bildet mit der Innenfläche der Führungshülse einen Ringspalt aus, wobei der Ringspalt den zweiten Öffnungsquerschnitt zur Durchführung der flüssigen Phase ausbildet.
Ferner ist die zweite Kontur des Stempels unmittelbar an einer Druckseite des Stempels angeordnet, wobei die Druckseite im Verdrängerraum des Druckkopfes angeordnet ist.
Ein Ringspalt zur Durchführung der flüssigen Phase des Metalls führt in vorteilhafter Weise für einen über den Umfang gleichmäßig verteilten Durchfluss der flüssigen Phase, wodurch der Verdrängerraum des Druckkopfes gleichmäßig befüllt werden kann. Die Fläche, bzw. der Durchmesser der Druckseite des Stempels entspricht der Fläche, bzw. dem Durchmesser der zweiten Kontur des Stempels und ist entsprechend kleiner als der Zentrierdurchmesser der Teilbereiche der ersten Kontur des Stempels.
Ferner bestimmt die sich aus dem Ringspalt ergebene Fläche für den Durchfluss des Druckkopfes.

Erfindungsgemäß weist der erste Bereich einen größeren Öffnungsquerschnitt auf als der zweite Öffnungsquerschnitt des zweiten Bereichs.
Die Querschnittsfläche des ersten Bereichs, der sich aus dem Innendurchmesser der Führungshülse und den Ausnehmungen der ersten Kontur des Stempels ergibt, ist somit größer als die Querschnittsfläche des zweiten Bereichs, der sich aus dem Innendurchmesser der Führungshülse und dem Außendurchmesser der zweiten Kontur des Stempels ergibt. Dadurch kann in vorteilhafter Weise erreicht werden, dass der Aktuierungsstoß des Druckkopfes zentrisch stattfindet und ein gleichmäßiger Druckaufbau eines Bauteils erreicht wird.

Der erfindungsgemäße Aufbau des Druckkopfes ermöglicht in vorteilhafter Weise eine genauen axialen Führung des Stempels in der Führungshülse und optimiert das Nachströmen der flüssigen Phase des Metalls, bzw. der Schmelze in den Verdrängerraum. Ferner wird in vorteilhafter Weise erreicht, dass das Nachströmen von Schutzgas durch die Düsenplatte in den Verdrängerraum verhindert wird. Um das Bilden von sogenannten Schutzgasblasen im Verdrängerraum zu verhindern, ist es erforderlich, bei einem vorgegebenen Hubprofil eines Piezo-Aktors - dieser dient zur Aktuierung des Kolbens - einen möglichst geringen Schmelzeaustausch über den Ringspalt zu erzeugen. Durch die erfindungsgemäße Anordnung wird erreicht, dass lediglich ein Nachströmen des durch die Düsenplatte ausgestoßenen Volumens an Schmelze in den Verdrängerraum nachfließt. Dabei kann durch den Ringspalt durchaus im Rahmen einer pulsierenden Auf- und Abwärtsströmung eine größere Menge an Schmelze zwischen dem Reservoir und dem Verdrängerraum ausgetauscht werden.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig. 1: Eine Schnittzeichnung eines erfindungsgemäßen Druckkopfes,
- Fig. 2: eine detaillierte Darstellung eines Stempels in einer Führungshülse,
- Fig. 3: eine Detailzeichnung eines Stempels,
- Fig. 4: eine Schnittzeichnung eines ersten Bereichs zwischen dem Stempel und der Führungshülse und
- Fig. 5: eine Schnittzeichnung eines zweiten Bereichs zwischen dem Stempel und der Führungshülse.

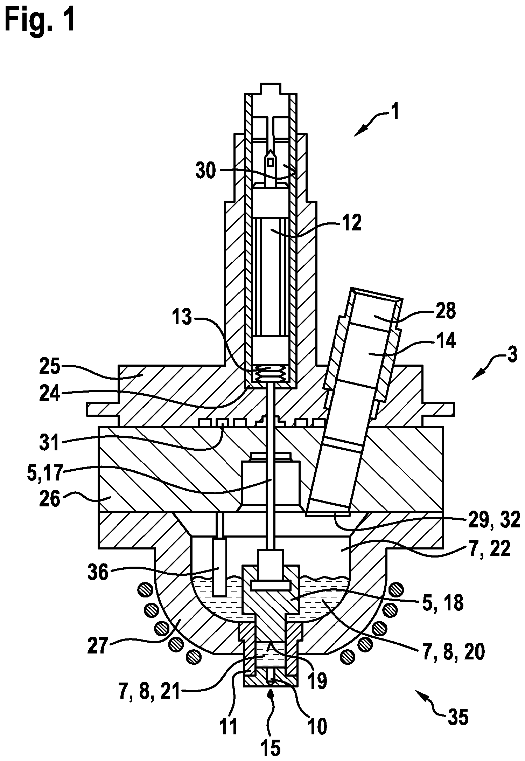

Fig. 1 zeigt ein Ausführungsbeispiel eines erfindungsgemäßen Druckkopfes 1 für einen 3D-Drucker.
Der Druckkopf 1 umfasst ein Gehäuse 3, eine Vorrichtung 28 zur Zuführung eines Metalls 14 in fester Phase, ein Reservoir 7, 27, eine Düsenvorrichtung 2 mit einer Austrittsöffnung 10 und einen Kolben 5. Ferner umfasst der Druckkopf eine Aktorvorrichtung 12 zur Verschiebung des Kolbens 5. Das Reservoir 7, 27 weist einen Schmelzbereich 20 und einen Verdrängerraum 21 für eine flüssige Phase 8 des Metalls 14 auf, wobei der Schmelzbereich 20 an einer inerten Atmosphäre 22 angrenzt und mit dem Verdrängerraum 21 derart verbunden ist, dass durch die Verschiebung des Kolbens 5 die flüssige Phase 8 des Metalls 14 zum Durchtritt durch die Austrittsöffnung 10 anregbar ist. Die flüssige Phase 8 des Metalls 14, bzw. das flüssige Metall 8 wird auch als Schmelze 8 bezeichnet und die inerte Atmosphäre 22 ist durch Einleitung eines Inertgases 22 in das Reservoir 7, 27 gebildet. Die Einleitung des Inertgases 22 findet bevorzugt über einen kalten Bereich des Druckkopfes 1 in das Reservoir 7, 27 statt.
Das Reservoir 7, 27 ist als Schmelztiegel 27 ausgebildet, wobei außerhalb des Schmelztiegels 27 ein Induktor 35 und innerhalb des Schmelztiegels ein Sensor 36, insbesondere ein Temperatursensor angeordnet sind. Zwischen dem Schmelztiegel 27 und dem Induktor 35, bzw. der Induktor Spule 35 kann sich optional noch ein nicht dargestellter Isolator befinden.
Die Grenze des Inertgases 22 zum flüssigen Metall 8 entspricht dem Füllstand des flüssigen Metalls 8 in dem Reservoir 7, 27.

Ferner ist das Gehäuse 3 mehrteilig ausgebildet, wobei es zumindest einen Kühlflansch 25, eine Isolierplatte 26 und das Reservoir 7, 27 umfasst. Temperaturempfindliche Bauteile der Messvorrichtung können somit vorteilhaft abgeschirmt werden.
Der Kolben 5 ist mehrteilig ausgebildet, wobei er zumindest eine Kolbenstange 17 aus einem metallischen Werkstoff und einen Stempel 18 aus Keramik umfasst. Die Kolbenstange 17 ragt ausgehend von der Aktorvorrichtung 12 durch den Kühlflansch 25 und der Isolierplatte 26 bis in das Reservoir 7, 27 hinein, wo sie in den Stempel 18 übergeht.

Der Kühlflansch 25 weist eine Ausnehmung 30 zur Aufnahme der Aktorvorrichtung 12, die als piezoelektrischer Aktor 12 ausgebildet ist, auf. Der piezoelektrische Aktor 12 ist während des Betriebs in der Ausnehmung 30 derart fixiert, dass er bei Anliegen einer Spannung einen Arbeitshub auf den Kolben 5, speziell auf die Kolbenstange 17 des Kolbens 5, ausübt. Die Kolbenstange 17 überträgt den Arbeitshub auf den Stempel 18, so dass dieser die flüssige Phase 8 des Metalls 14 zum Durchtritt durch die Austrittsöffnung 10 anregt. Der Kolben 5 ist ohne Aktuierung des Aktors 12 durch eine Feder 13 in eine Ausgangsstellung rückstellbar, wobei die Feder 13 in der Ausnehmung 30 des Kühlflanschs 25 zwischen einem Absatz 24 und dem Aktor 12 angeordnet ist. Die Feder 13 ist als Tellerfeder ausgebildet.
Ferner weist der Kühlflansch 25 Kühlkanäle 31 zur Kühlung auf. Die Kühlkanäle 31 sind zwischen dem Kühlflansch 25 und der Isolierplatte 26 angeordnet und werden mit einem Kühlmedium durchspült. Dies dient als Kühlung gegenüber der Erwärmung durch die Schmelze 8 und zum Kühlen des Aktors 12 im Betrieb. Der Kühlflansch 25 ist aus einem metallischen Werkstoff gebildet.
Die an dem Kühlflansch 25 auf Seiten der Kühlkanäle 31 anliegende Isolierplatte 26 ist aus einem wärmeisolierenden Material gebildet und derart ausgebildet, dass sie einen Wärmeübergang vom Reservoir 7, 27 zum Kühlflansch 25 vermindert.

Die Vorrichtung 28 zur Zuführung des Metalls 14, bzw. die Nachfülleinheit 28 mündet in das Reservoir 7, 27 und ist in dem Kühlflansch 25 und der Isolierplatte 26 angeordnet. Die Nachfülleinheit 28 ragt durch den Kühlflansch 25 und der Isolierplatte 26 hindurch und das Metall 14, bzw. das zu druckende Material 14 ist von außen durch die Vorrichtung 28 zuführbar. Bevorzugt können vordosierte Materialstücke, bzw. Pellets verwendet werden. Am Übergang der Isolierplatte 26 zum Reservoir 7, 27 befindet sich eine Öffnung 29 durch die das Material 14 in das Reservoir 7, 27 gelangt. Die Öffnung 29 ist durch eine Vorrichtung 32 verschließbar, so dass diese bevorzugt nur bei Zuführung des Materials 14 geöffnet ist, wodurch das Entweichen von Energie, bzw. Gas aus der inerten Atmosphäre 22 verringert wird.

Das Metall 14 gelangt in einer festen Phase 14 in den Schmelzbereich 20 des Schmelztiegels und wird durch den Induktor 35 erhitzt, bis es in eine flüssige Phase 8 übergeht. Bei Erreichen einer gewünschten Prozesstemperatur der Schmelze 8, die durch den Temperatursensor 36 ermittelt wird, und des kann der Druckkopf 1 den Betrieb aufnehmen. Der Stempel 18 des Kolbens 5 ist mit einer Druckseite 19 in der Schmelze 8, bzw. von Schmelze 8 umgeben und an der Verbindungsseite zur Kolbenstange 17 in der inerten Atmosphäre 22, bzw. von der inerten Atmosphäre 22 umgeben. Die Kolbenstange 17 kommt prozessbedingt nicht mit der Schmelze 8 in Berührung.
Die Keramik des Stempels 18 ist vorteilhafterweise sehr gut temperaturleitend, um die durch den Induktor 35 erzeugte Wärme gut in den Verdrängerraum 21 übertragen zu können.

Bei Aktuierung des piezoelektrischen Aktors 12 übt die Druckseite 19 des Stempels 18 einen Druck, bzw. Hub auf die Schmelze 8 im Verdrängerraum 21 in Richtung der Austrittsöffnung 10 aus und sorgt für einen Ausstoß eines Tropfens 15 durch die Düsenvorrichtung 2, bzw. der Austrittsöffnung 10 der Düsenvorrichtung 2. Die Düsenvorrichtung 2, insbesondere die Düsenplatte 9 ist austauschbar, wodurch der Einsatz von unterschiedlichen Düsengeometrien möglich ist.

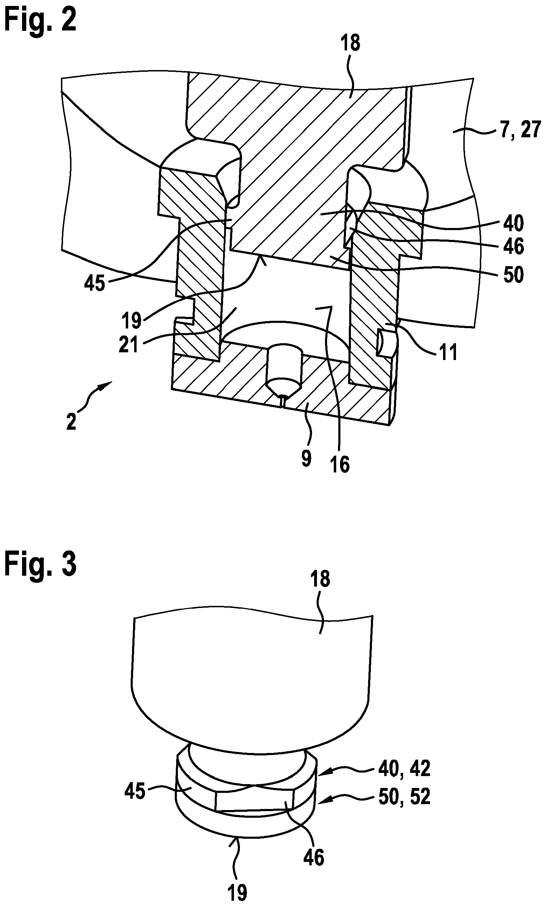

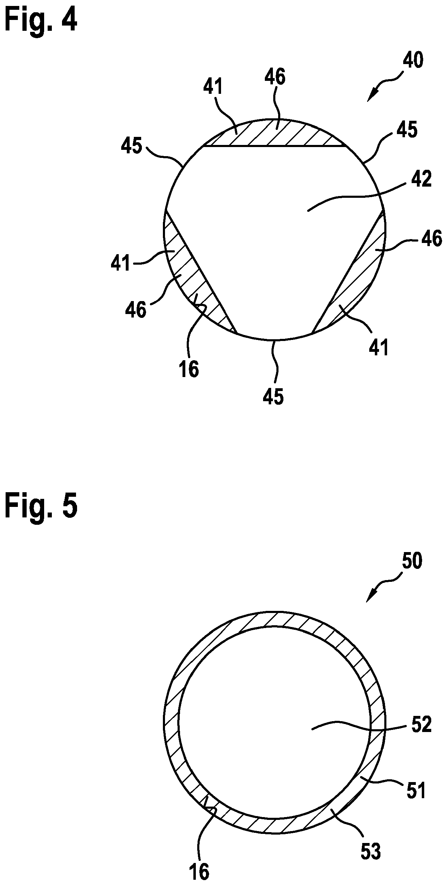

Fig. 2 zeigt eine detaillierte Darstellung eines Stempels 18 in einer Führungshülse 11 und Fig. 3 zeigt eine Detailzeichnung des Stempels 18. Der Stempel 18 und die Führungshülse 11 bilden zumindest zwei Bereiche 40, 50 mit unterschiedlichen, in den Figuren 4 und 5 detailliert dargestellten, Öffnungsquerschnitten 41, 51 zur Durchführung der flüssigen Phase 8 zwischen dem Reservoir 27 und dem Verdrängerraum 21 aus. Der Stempel 18, die Führungshülse 11 und die Düsenplatte 9 bilden den Verdrängerraum 21 aus, wobei eine Innenfläche 16 der Führungshülse 11 kreisförmig ausgebildet ist.

Fig. 4 zeigt einen Schnitt durch einen ersten Bereich 40, wobei der erste Bereich 40 durch eine erste Kontur 42 des Stempels 18 und der Innenfläche 16 der Führungshülse 11 ausgebildet ist und die erste Kontur 42 drei kreisförmige Teilbereiche 45 aufweist durch die der Stempel 18 konzentrisch in der kreisförmigen Führungshülse 11 geführt ist. Die drei Teilbereiche 45 sind konzentrisch über den Umfang des Stempels 18 im ersten Bereich 40 angeordnet. Ferner weist die erste Kontur 42 Ausnehmungen 46 auf, die mit der Innenfläche 16 der Führungshülse 11 einen ersten Öffnungsquerschnitt 41 zur Durchführung der flüssigen Phase 8 ausbilden.
Der erste Bereich 40 weist dabei einen größeren Öffnungsquerschnitt 41 auf als der zweite Öffnungsquerschnitt 51 eines zweiten Bereichs 50.
Die Genauigkeit der Führung des Stempels 18 zur Vermeidung von Winkelfehler durch schräg austretenden Tropfen 15 wird durch die partiell an der Führungshülse 11 anliegende erste Kontur 42 erreicht. Die Zentrierung des Stempels 18 darf den oben angesprochenen Schmelzeaustausch nicht verhindern, muss aber den Stempel 18 konzentrisch zu der Führungshülse 11 ausrichten.

Fig. 5 zeigt einen Schnitt durch den zweiten Bereich 50, wobei der zweite Bereich 50 mit einem zweiten Öffnungsquerschnitt 51 zur Durchführung der flüssigen Phase 8 durch eine zweite Kontur 52 des Stempels 18 und der Innenfläche 16 der Führungshülse 11 ausgebildet ist. Die zweite Kontur 52 des Stempels 18 bildet mit der Innenfläche 16 der Führungshülse 11 einen Ringspalt 53 aus, wobei der Ringspalt 53 den zweiten Öffnungsquerschnitt 51 zur Durchführung der flüssigen Phase 8 bildet.
Die Verdrängung der Schmelze 8 zurück in Richtung des Reservoirs 7 ist als Verlust zu werten, so dass eine Auslegung des Ringspaltes 53 so erfolgen muss, dass der Anteil der durch den Ringspalt 53 verdrängten Schmelze 8 am Gesamtwert des durch den Aktor 12 erzeugten Hubes verdrängten Volumens minimal ist.
Ferner ist die zweite Kontur 52 unmittelbar an einer Druckseite 19 des Stempels 18 angeordnet, wobei die Druckseite 19 im Verdrängerraum 21 des Druckkopfes 1 angeordnet ist.

Der erfindungsgemäße Druckkopf 1 bildet eine optimierte Führungsgeometrie in der dargestellten Abfolge des ersten Bereichs 40 mit dem ausgebildeten 3-Flach und dem an der Druckseite 19 angeordnetem den Ringspalt 53 ausbildenden zweiten Bereich 50. Die Kombination aus den zwei Bereichen 40, 50 ermöglicht es, einen Tropfendurchmesser der Schmelze 8 von beispielsweise 300 µm, wobei diese zwischen 100 µm bis 400 µm variieren können, darzustellen. Die erfindungsgemäße Ausgestaltung des Druckkopfes 1, insbesondere der zwei Bereiche 40, 50 ermöglicht es zudem, dass die Strömung der Schmelze 8 im Ringspalt 53 laminar bleibt und ein Übergang zur turbulenten Strömungsform vermieden wird.
Zur Erreichung der laminaren Strömung der Schmelze weist der Ringspalt 53 aufgrund der niedrigen Viskosität von Metallschmelze (für üblichen Metalle v = η/ρ < 1 cSt) eine Dicke von weniger als 0,4mm, vorzugsweise 0,25mm auf. Die Höhe des Ringspalts 53, bzw. die Distanz in axialer Richtung zwischen der Druckseite 19 des Stempels 18 und dem ersten Bereichs 40, weist einen Wert zwischen 1mm und 11mm, vorzugsweise zwischen 2mm und 5mm auf.
Der Kolbendurchmesser liegt zwischen 4mm und 22mm. Für größere Tropfendurchmesser muss der gesamte Druckkopf 15 in alle drei räumlichen Richtungen linear nach oben skaliert werden.

## Patentansprüche

1. Druckkopf (1) für einen 3D-Drucker, insbesondere Metalldrucker, umfassend ein Gehäuse (3), eine Vorrichtung (28) zur Zuführung eines Metalls (14), ein Reservoir (7, 27) für eine flüssige Phase (8) des Metalls (14), eine Düsenvorrichtung (2) mit einer Führungshülse (11) und einer Düsenplatte (9) und einen Kolben (5), umfassend eine Kolbenstange (17) und einen Stempel (18), wobei der Stempel (18), die Führungshülse (11) und die Düsenplatte (9) einen Verdrängerraum (21) ausbilden, wobei
der Stempel (18) und die Führungshülse (11) zumindest zwei Bereiche (40, 50) mit unterschiedlichen Öffnungsquerschnitten (41, 51) zur Durchführung der flüssigen Phase (8) zwischen dem Reservoir (27) und dem Verdrängerraum (21) ausbilden, wobei
ein erster Bereich (40) durch eine erste Kontur (42) des Stempels (18) und einer Innenfläche (16) der Führungshülse (11) ausgebildet ist, wobei die erste Kontur (42) Teilbereiche (45) aufweist durch die der Stempel (18) in der Führungshülse (11) geführt ist und Ausnehmungen (46) aufweist, die mit der Innenfläche (16) der Führungshülse (11) einen ersten Öffnungsquerschnitt (41) zur Durchführung der flüssigen Phase (8) ausbilden, wobei
ein zweiter Bereich (50) mit einem zweiten Öffnungsquerschnitt (51) zur Durchführung der flüssigen Phase (8) durch eine zweite Kontur (52) des Stempels (18) und der Innenfläche (16) der Führungshülse (11) ausgebildet ist,
wobei die Innenfläche (16) der Führungshülse (11) kreisförmig ausgebildet ist, wobei die zweite Kontur (52) des Stempels (18) mit der Innenfläche (16) der Führungshülse (11) einen Ringspalt (53) ausbildet, der den zweiten Öffnungsquerschnitt (51) zur Durchführung der flüssigen Phase (8) bildet,
**dadurch gekennzeichnet, dass**
die zweite Kontur (52) unmittelbar an einer Druckseite (19) des Stempels (18) angeordnet ist, wobei die Druckseite (19) im Verdrängerraum (21) des Druckkopfes (1) angeordnet ist und
der erste Bereich (40) einen größeren Öffnungsquerschnitt (41) aufweist als der zweite Öffnungsquerschnitt (51) des zweiten Bereichs (50).

2. Druckkopf (1) nach Anspruch 1,
**dadurch gekennzeichnet, dass**
die erste Kontur (42) des Stempels (18) kreisförmige Teilbereiche (45) aufweist durch die der Stempel (18) in der Führungshülse (11) konzentrisch geführt ist.

3. Druckkopf (1) nach Anspruch 2,
**dadurch gekennzeichnet, dass**
die erste Kontur (42) drei konzentrisch angeordnete Teilbereiche (45) aufweist.

## Claims

1. Print head (1) for a 3D printer, in particular a metal printer, comprising a housing (3), a device (28) for supplying a metal (14), a reservoir (7, 27) for a liquid phase (8) of the metal (14), a nozzle device (2) having a guide sleeve (11) and a nozzle plate (9) and a piston (5), comprising a piston rod (17) and a plunger (18), wherein the plunger (18), the guide sleeve (11) and the nozzle plate (9) form a displacement chamber (21), wherein
the plunger (18) and the guide sleeve (11) form at least two regions (40, 50) with different opening cross sections (41, 51) for leading the liquid phase (8) through between the reservoir (27) and the displacement chamber (21), wherein
a first region (40) is formed by a first contour (42) of the plunger (18) and an inner surface (16) of the guide sleeve (11), wherein the first contour (42) has subregions (45) by which the plunger (18) is guided in the guide sleeve (11) and has recesses (46) which, with the inner surface (16) of the guide sleeve (11), form a first opening cross section (41) for leading the liquid phase (8) through, wherein
a second region (50) having a second opening cross section (51) for leading the liquid phase (8) through is formed by a second contour (52) of the plunger (18) and the inner surface (16) of the guide sleeve (11), wherein the inner surface (16) of the guide sleeve (11) is circular, wherein
the second contour (52) of the plunger (18) forms with the inner surface (16) of the guide sleeve (11) an annular groove (53), which forms the second opening cross section (51) for leading the liquid phase (8) through,
**characterized in that**
the second contour (52) is arranged directly on a pressure side (19) of the plunger (18), wherein the pressure side (19) is arranged in the displacement chamber (21) of the print head (1), and
the first region (40) has a larger opening cross section (41) than the second opening cross section (51) of the second region (50).

2. Print head (1) according to Claim 1,
**characterized in that**
the first contour (42) of the plunger (18) has circular subregions (45), by which the plunger (18) is guided concentrically in the guide sleeve (11).

3. Print (1) according to Claim 2,
**characterized in that**
the first contour (42) has three concentrically arranged subregions (45).

## Revendications

1. Tête d'impression (1) destinée à une imprimante 3D, notamment une imprimante sur métal, ladite tête d'impression comprenant un boîtier (3), un dispositif (28) d'amenée d'un métal (14), un réservoir (7, 27) destiné à une phase liquide (8) du métal (14), un dispositif à buses (2) comprenant un manchon de guidage (11) et une plaque à buses (9) et un piston (5) comprenant une tige de piston (17) et un poinçon (18), le poinçon (18), le manchon de guidage (11) et la plaque à buses (9) formant un espace de déplacement (21),
le poinçon (18) et le manchon de guidage (11) formant au moins deux zones (40, 50) de sections d'ouverture transversales différentes (41, 51) destinées au passage de la phase liquide (8) entre le réservoir (27) et la chambre de déplacement (21),
une première zone (40) étant formée par un premier contour (42) du poinçon (18) et une surface intérieure (16) du manchon de guidage (11), le premier contour (42) comportant des zones partielles (45) à travers lesquelles le poinçon (18) est guidé dans le manchon de guidage (11) et comporte des évidements (46) qui forment avec la surface intérieure (16) du manchon de guidage (11) une première section d'ouverture transversale (41) destinée au passage de la phase liquide (8),
une deuxième zone (50) ayant une deuxième section d'ouverture transversale (51) destinée au passage de la phase liquide (8) étant formée par un deuxième contour (52) du poinçon (18) et de la surface intérieure (16) du manchon de guidage (11),
la surface intérieure (16) du manchon de guidage (11) étant circulaire,
le deuxième contour (52) du poinçon (18) formant avec la surface intérieure (16) du manchon de guidage (11) une fente annulaire (53) qui forme la deuxième section d'ouverture transversale (51) destinée au passage de la phase liquide (8),
**caractérisée en ce que**
le deuxième contour (52) est disposé directement sur un côté de pression (19) du tampon (18), le côté de pression (19) étant disposé dans la chambre de déplacement (21) de la tête d'impression (1) et
la première zone (40) a une section d'ouverture transversale (41) supérieure à la deuxième section d'ouverture transversale (51) de la deuxième zone (50).

2. Tête d'impression (1) selon la revendication 1,
**caractérisée en ce que**
le premier contour (42) du poinçon (18) comporte des zones partielles circulaires (45) à travers lesquelles le poinçon (18) est guidé concentriquement dans le manchon de guidage (11).

3. Tête d'impression (1) selon la revendication 2,
**caractérisée en ce que**
le premier contour (42) comporte trois zones partielles (45) disposées concentriquement.
